Europäisches Patentamt

European Patent Office

Office européen des brevets

(11) Numéro de publication: **0 138 641**
.**B1**

(12) **FASCICULE DE BREVET EUROPEEN**

(45) Date de publication du fascicule du brevet: **20.07.88**

(21) Numéro de dépôt: **84401683.2**

(22) Date de dépôt: **17.08.84**

(51) Int. Cl.⁴: **B 23 D 36/00**, B 31 B 1/20

(54) **Dispositif automatique de mise au registre d'un outil monté sur cylindre rotatif pour le traitement de produits en plaques.**

(30) Priorité: **18.08.83 FR 8313577**

(43) Date de publication de la demande:
**24.04.85 Bulletin 85/17**

(45) Mention de la délivrance du brevet:
**20.07.88 Bulletin 88/29**

(84) Etats contractants désignés:
**AT BE CH DE FR GB IT LI LU NL SE**

(56) Documents cités:
**FR-A-2 120 160**
**FR-A-2 274 534**
**FR-A-2 345 255**
**GB-A-1 014 854**
**US-A-3 581 613**
**US-A-3 742 798**
**US-A-3 774 016**
**US-A-3 820 429**

**PATENTS ABSTRACTS OF JAPAN, vol. 6, no. 232, 18 novembre 1982, page 1110(M-172); & JP - A - 57 132 916 (KAWASAKI SEITETSU K.K.) 17-08-1982**

(73) Titulaire: **S.A. Martin**
**22 rue Decomberousse**
**F-69100 Villeurbanne (FR)**

(72) Inventeur: **Torti, Mario**
**45 rue Raulin**
**F-69007 Lyon (FR)**
Inventeur: **Fernandez, Emilio**
**7 chemin de Rebufert**
**F-69500 Bron (FR)**

(74) Mandataire: **Colomb, Claude**
**BOBST SA Boîte postale**
**CH-1000 Lausanne (CH)**

Courier Press, Leamington Spa, England.

## Description

La présente invention se rapporte à un dispositif de mise au registre d'un outil monté sur cylindre rotatif pour le traitement de produits en plaques, tel que par exemple un outil de découpe, refoulage par écrasement, ou impression de plaques de carton dans une machine de façonnage et impression de caisses en carton ondulé.

Dans l'industrie du carton ondulé, en particulier pour le façonnage et l'impression de caisses d'emballage, on utilise de façon courante des machines de découpe ou d'impression rotatives, constituées de deux cylindres travaillant à la manière d'un laminoir. Un découpeur rotatif par exemple comporte deux cylindres superposés tournant en sens inverse et à la même vitesse circonférencielle. Sur l'un des cylindres, dit "porte-outils", sont fixés des outils de découpe constitués par des filets coupants généralement emmanchés dans des logements formés dans une coquille en bois contre-plaqué épousant la forme du cylindre. La deuxième cylindre, dit "contre-partie de découpe", reçoit un revêtement plastique souvent constitué par un habillage de polyuréthane. Un dispositif usuel de réglage par paliers excentrés permet de faire varier l'écartement entre ces deux cylindres pour obtenir la pression de coupe nécessaire quelle que soit l'épaisseur du carton travaillé.

Le cylindre porte-outil et le cylindre contre-partie sont mis tous deux en rotation par l'intermédiaire d'engrenages déterminés de manière que la vitesse périphérique de l'outil corresponde à celle de la contre-partie plastique. Ces deux cylindres sont reliés à la cinématique générale de la machine de traitement, et plus particulièrement à son dispositif cyclique d'alimentation en plaques, par l'intermédiaire d'un train d'engrenages planétaires, dont le porte-satellites est lié en rotation à un motoréducteur frein. Une action par ce moto-réducteur permet alors à l'utilisateur de décaler angulairement le découpeur par rapport à la cinématique générale de façon à présenter l'outil en phase avec la plaque à découper.

Dans ces dispositifs connus, où le dispositif d'alimentation introduit les plaques l'une après l'autre à un intervalle constant théoriquement égale au développement du porte-outil, soit une plaque par tour de porte-outil, on constate que la précision de l'arrivée des plaques dans le découpeur est généralement insuffisante pour la précision exigée de la position des découpes par rapport aux extrémités de la plaque.

En effet, les plaques de carton introduites dans le magasin d'alimentation de la machine sont les unes bien planes, les autres légèrement cintrées si bien que le jeu dans le magasin est variable d'une plaque à l'autre et que dès le départ les plaques peuvent présenter un certain décalage. Par ailleurs, une ou plusieurs machines d'impression sont généralement intercalées entre le découpeur et le dispositif d'alimentation, et il peut survenir des glissements aléatoires sur les rouleaux entraineurs de ces machines intermédiaires, ce qui diminue encore la précision du transfert des plaques de carton. On n'obtient pas avec de tels dispositifs une présentation des plaques strictement en phase avec les cylindres de découpe dans les limites de la précision nécessaire. On est alors généralement contraint d'effectuer au moyen du découpeur rotatif des coupes frontales avant et arrière complémentaires, ce qui oblige à utiliser des lames supplémentaires, une plaque plus grande que nécessaire, et à produire un déchet relativement important.

Le dispositif de l'invention permet d'éviter ces coupes frontales et les déchets qui en résultent. Grâce à celui-ci en effet, l'outil se présentera pour la découpe en synchronisme parfait avec les plaques, c'est-à-dire parfaitement "au registre".

Ce qui vient d'être dit s'applique évidemment aussi bien aux imprimeuses rotatives, pour lesquelles il est nécessaire que l'impression soit effectuée à l'endroit prévu sur chaque caisse. Le dispositif de l'invention, qui est chargé de décaler la position de l'outil pour que celui-ci soit scrupuleusement en phase avec la plaque incidente, est appelé, en termes du métier, "dispositif de mise au registre".

L'invention concerne un dispositif de mise au registre. De tels dispositifs de mise au registre se rencontrent également dans des machines travaillant une bande continue de matière. Dans ces machines, par exemple des coupeuses en feuilles, le dispositif de mise au registre est semblable à celui décrit par le brevet US 3 774 016 et comprend généralement un dispositif de codage de la vitesse de défilement de la matière en bande défilant dans la machine. Ce dispositif de codage est réalisé sous la forme d'une roue de mesure en contact direct avec la bande défilante. Le dispositif de codage ci-dessus est associé d'une part avec un détecteur de la position de la coupe transversale de la bande et d'autre part avec un détecteur d'une marque de repérage imprimée sur la bande à tronçonner. Les informations fournies par ces divers organes sont ensuite envoyées à un calculateur qui émet une information utilisée pour modifer la vitesse moyenne du couteau rotatif, de façon à ce que la longueur de coupe de chaque section de bande corresponde à la longueur désirée.

Le principal inconvénient de l'utilisation d'un tel dispositif dans les machines travaillant des plaques successives réside dans le fait de l'impossibilité d'utiliser la matière défilante comme support de mesure de la vitesse linéaire des objets, cela en raison de l'espace existant entre deux plaques successives. Il est seulement possible d'utiliser des éléments de codage et de détection semblables, mais en leur attribuant des fonctions quelque peu différentes, en particulier, il est nécessaire de prévoir un organe donnant une information relative à l'introduction des plaques dans la machine, ce qui est inutile dans le dispositif de mise au registre décrit ci-dessus. L'invention se réfère à un dispositif de mise au registre automatique pour installation de traitement par cylindre rotatif de produits en plaques, ladite installation comportant un dispositif d'alimentation cyclique des plaques vers un cylindre porte-outil entraîné par la cinématique générale de la machine de manière à ce que l'intervalle d'introduction des plaques successives corresponde au développement du porte-outil ou à un multiple de celui-ci, l'entraînement du cylindre porte-outil comportant un dispositif de décalage angulaire par rapport à la cinématique générale commandé par un moteur de réglage, un premier dispositif de codage, un second dispositif de codage, un premier détecteur et en bloc de calcul et de correction, caractérisé en ce que le premier dispositif de codage est lié à le cinématique générale de façon à fournir une information représentative de la vitesse de progression théorique des plaques, en ce que le second dispositif de codage est lié au dispositif de décalage angulaire de façon à fournir une information représentative du décalage angulaire donné au cylindre porte-outil, en ce que le premier détecteur du passage du front avant des plaques est disposé en amont du cylindre porte-outil, à une distance inférieure à la distance théorique entre deux plaques successives, en ce qu'un second détecteur est accouplé à la cinématique générale de façon à délivrer des informations liées au cycle d'introduction des plaques et en ce que le bloc de calcul et de correction reçoit et analyse les informations fournies par lesdits premier et second dispositifs de codage et par lesdits premier et second détecteurs de façon à fournir, à chaque cycle, des ordres de correction de la position angulaire du cylindre porte-outil en fonction de la différence entre la position réelle et la position théorique d'une plaque introduite.

L'invention sera mieux comprise à l'aide de la description suivante d'un exemple non limitatif de réalisation appliqué à une installation de découpe de flans en carton ondulé, en référence aux dessins annexés dans lesquels:

—la figure 1 est une représentation schématique d'une installation de découpe de flans en carton équipée du dispositif de mise au registre de l'invention,

—la figure 2 est une représentation schématique du dispositif différentiel, connu en soi, équipant l'installation de la figure 1.

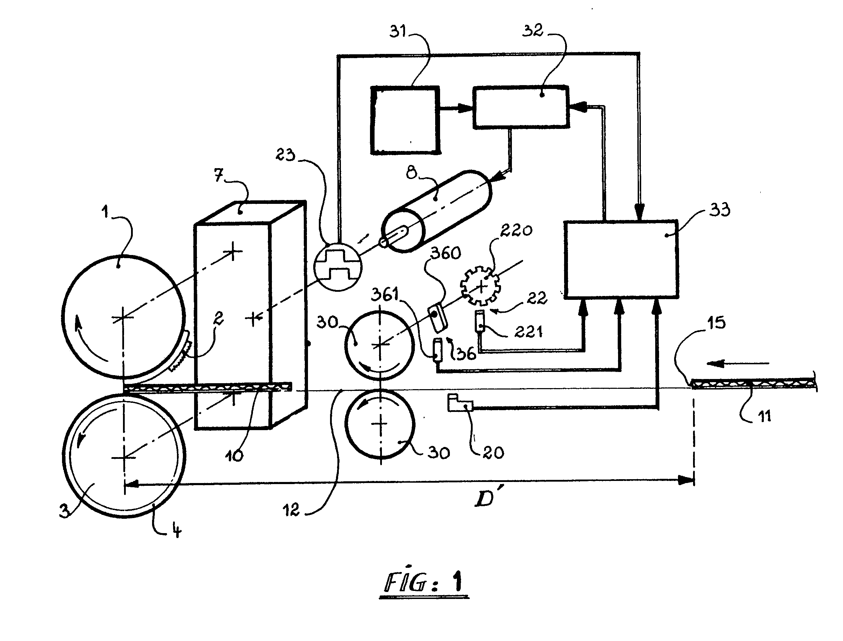

Sur la figure 1, la référence 1 désigne le cylindre porte-outil avec l'outil de découpe 2, et la référence 3 désigne le cylindre contre-partie associé, avec sa contrepartie plastique 4. Les cylindres 1 et 3 tournent en sens inverse à la même vitesse périphérique selon les flèches. De manière classique pour ce genre de dispositif, les cylindres 1 et 3 sont entraînés à partir de la cinématique générale de la machine par des engrenages non représentés sur la figure schématique, et à travers un système différentiel 7, décrit ci-après, commandé par un groupe moto-réducteur 8. Le moteur 8 permet le décalage avant ou arrière de l'ensemble de découpe 1, 3 par rapport à la cinématique générale afin de pouvoir présenter l'outil 2 en phase avec les plaques à découper.

Les flans à découper 10, 11 défilent l'un derrière l'autre dans un plan horizontal 12, comme indiqué par la flèche sur le dessin, entrainés entre autres par un couple de cylindres entraîneurs 30 liés à la cinématique générale, et sont distants l'un de l'autre d'une distance réelle D', voisine du développement géométrique D du cylindre porte-outil 1. L'écart D—D', positif ou négatif, résulte des décalages intempestifs subis par les plaques depuis leur sortie du magasin d'alimentation. Ici on a supposé que la première plaque 10 arrive correctement en phase avec l'outil 2. La deuxième plaque 11 a son front avant 15 situé à la distance réelle D' de celui de la plaque 10, légèrement différente, en plus ou en moins, de la distance théorique D.

Conformément à l'invention, et dans le but de remettre en phase la plaque 11 et l'outil de découpe 2, c'est-à-dire d'effectuer la "mise au registre" de ce dernier, l'installation comporte des organes complémentaires précisés ci-après.

Un détecteur 20, constitué dans l'exemple considéré par une cellule photoélectrique, est situé en amont du cylindre 1, à une distance de celui-ci inférieure à son développement géométrique D. La cellule 20 engendre un signal chaque fois que le font avant d'un flan passe devant elle.

Un générateur d'impulsions 22, constitué d'une roue codeuse 220 et d'un détecteur de proximité 221, est monté sur l'arbre d'un des cylindres entraineurs 30, et est donc lié à la cinématique générale de la machine. Il fournit un train d'impulsions de fréquence proportionnelle à la vitesse de la cinématique générale et donc proportionnelle à la vitesse théorique d'avancée des plaques.

Un générateur d'impulsions 23 relié à la sortie du moto-réducteur 8, fournit une information sur le sens et la valeur du décalage introduit par l'action du moteur 8 sur le différentiel 7.

Un détecteur 36, composé d'un doigt 360 centré sur l'axe du cylindre 30 et tournant avec lui, et d'un détecteur de proximité 361, fournit une impulsion à chaque passage théorique d'une feuille correctement margée à une distance choisie, par exemple 7 mm, en aval de la cellule 20. Cette impulsion est donc liée au cycle de marge des feuilles; son apparition est réglée à l'instant voulu par déplacement du détecteur 361.

Un calculateur électronique 33, équipé en particulier d'un compteur-décompteur, de comparateurs, et d'un générateur d'ordre, est chargé de regrouper et d'analyser, comme il sera explicité ci-après, les informations qui lui sont fournies par les détecteurs 36 et 20 et les générateurs d'impulsions 22 et 23, et de fournir en conséquence un signal de correction au moto-réducteur 8, comme on l'a représenté par les connexions correspondantes sur le dessin. Ce calculateur 33 peut être d'un modèle tout-à-fait courant et aisément réalisable à partir d'éléments disponibles dans le commerce et de ses fonctions ci-dessous explicitées; il ne sera donc pas décrit ici plus en détails, sa réalisation étant du domaine courant de l'homme de métier et ne faisant appel pour celui-ci qu'à des opérations de routine et en elles-mêmes totalement en dehors de l'invention. Un tel bloc calculateur peut d'ailleurs être fourni directement tel quel par les constructeurs sur communication préalable à ceux-ci de ses fonctions souhaitées.

Les ordres de correction sont donnés au moteur 8 par l'intermédiaire d'un variateur 32, sur lequel l'opérateur peut agir manuellement, à l'aide d'une commande manuelle classique 31.

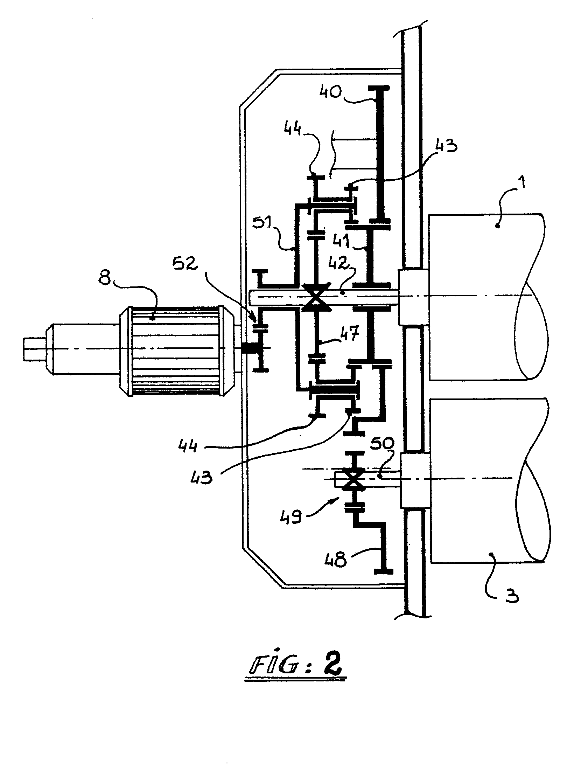

Le dispositif différentiel 7 utilisé dans la réalisation de la figure 1 est tel qu'on l'a représenté schématiquement sur la figure 2. Un tel dispositif est connu en soit, et ne fait donc pas partie de l'invention.

En régime normal, une roue dentée 40 est entraînée par la cinématique générale de la machine et entraîne l'engrenage 41 monté fou sur l'arbre 42 du cylindre porte-outil 1. La roue dentée 41 entraîne les satellites 43—44, les engrenages 44 entraînant en rotation l'arbre 42 par l'intermédiaire de la roue dentée 47.

La roue dentée 41 entraîne en engrènement une roue dentée 48 qui entraine elle-même, par l'intermédiaire d'un excentrique 49 destiné au réglage de l'écartement entre les cylindres 1 et 2, l'arbre 50 du cylindre inférieur 3. Tous ces engrenages sont dimensionnés de façon que les cylindres 1 et 3 tournent à la même vitesse périphérique.

Le porte-satellites 51 est monté fou sur l'arbre 42 et est relié en engrènement à l'arbre du moteur 8 par un couple de pignons 52.

Le dispositif différentiel de la figure 2 fonctionne de la façon suivante:

En faisant tourner momentanément le moteur 8, on fait tourner l'engrenage 52, et donc le porte-satellites 51, d'un certain angle. Relativement aux pignons 40, 41, 48, les satellites 43, 44 tournent alors du même angle, ce qui décale d'autant l'arbre 42 par l'intermédiaire du pignon 47, et donc le cylindre 1 par rapport au cylindre 3.

Le fonctionnement du dispositif de la figure 1 est le suivant: Avant de mettre en route la mise au registre automatique, l'opérateur commence par positionner manuellement le registre.

Il place donc le bloc 31 en position "manuel" et opère en feuille à feuille pour positionner le registre.

A chaque fois que le front avant 15 d'une feuille 11 passe sur la cellule 20, le calculateur 33 débute le comptage des impulsions d'une base de temps de période 1 microseconde.

Lorsque le détecteur de proximité 361 est activé, c'est-à-dire théoriquement 7 mm après le passage du front 15 à hauteur de la cellule 20, le compteur est arrêté et sa valeur (t) enregistrée. Simultanément, on lit la valeur de la vitesse V de la machine, fournie par le générateur d'impulsions 22. Le calculateur 33 procède alors au calcul de la distance réelle $x=Vt$ parcourue par le front 15 depuis son passage sur la cellule 20.

Cette opération est répétée pour chaque plaque sans que l'opérateur, toujours opérant manuellement, ait lieu d'en tenir compte.

Lorsque l'opérateur considère que le registre de sa découpe est correct, c'est-à-dire qu'au moins la dernière feuille arrive correctement au découpeur, il interrompt le réglage manuel et passe en position "automatique".

Le calculateur alors enregistre comme référence la valeur: $x_{ref}=Vt$ relative à la dernière feuille (ou, si le préfère, à la moyenne des quelques dernières feuilles supposées toutes correctement au registre).

Pour chaque feuille 11 suivante, le calculateur mesure toujours la valeur $x=Vt$ ci-dessus définie, mais cette fois-ci il compare cette valeur à la valeur de référence $x_{ref}$, et en déduit la correction, avant ou arrière, à apporter, par l'intermédiaire du moteur 8 et du différentiel 7, au porte-outil 1, pour que la feuille 11 arrive exactement en phase avec la découpe correcte. L'opération s'arrête lorsque le codeur 23 indique au calculateur 33 que le moteur 8 a tourné de la quantité suffisante.

On remarquera que, en cas d'absence de plaque suivante, le cellule 20 n'envoie pas de signal, ce qui élimine le risque de correction intempestive, le nouveau passage du repère 15 devant le détecteur rédéclenchant un cycle nouveau pour l'éventuelle plaque suivante, et ainsi de suite. On notera que la distance C, entre la cellule 20 et le porte-outil 1, sera déterminée en fonction de la vitesse d'action du moteur 8, de telle sorte qu'il ait le temps de provoquer la correction nécessaire pendant que la nouvelle plaque parcourt la distance C. En pratique, la distance C sera souvent voisine de la moitié de D. Par ailleurs, il est possible d'introduire une valeur de consigne de correction maximale pour éviter qu'une plaque trop décalée n'entraîne une correction impossible à faire et ne nuise à la correction de la plaque suivante.

Il est possible également d'introduire une valeur de consigne de retard à la correction si la différence entre le développement D et la longuer maximale L des plaques introduites est inférieure à la distance C. Cette valeur de consigne correspondra à la distance C—(D—L). De la sorte, la correction ne sera pas effectuée avant que la plaque précédene ait dégagé l'axe de coupe. On évite ainsi de déplacer l'outil quand il est engagé dans le carton, sauf pour les très grands formats où le réglage interviendra en fin de la feuille précédente. Egalement, au lieu de détecter le front avant 15 de la nouvelle plaque 11, on pourrait aussi détecter un repère quelconque formé sur la plaque, et par exemple un repère imprimé par une imprimeuse située en amont, et dont la position est tout aussi caractéristique de la position exacte de la plaque par rapport au cylindre porte-outil.

**Revendication**

Dispositif de mise au registre automatique pour installation de traitement par cylindre rotatif de produits en plaques, ladite installation comportant un dispositif d'alimentation cyclique des plaques (10, 11) vers un cylindre porte-outil (1) entraîne par la cinématique générale (30) de la machine de manière à ce que l'intervalle d'introduction des plaques (10, 11) successives corresponde au développement (D) du porte-outil (1) ou à un multiple de celui-ci, l'entraînement du cylindre porte-outil (1) comportant un dispositif de décalage angulaire (7) par rapport à la cinématique générale (30) commandé par un moteur de régalge (8), un premier dispositif de codage (22), un second dispositif de codage (23), un premier détecteur (20) et un bloc de calcul et de correction (33), caractérisé en ce que le premier dispositif de codage (22) est lié à la cinématique générale (30) de façon à fournir une information représentative de la vitesse de progression théorique des plaques (10, 11), en ce que le second dispositif de codage (23) est lié au dispositif de décalage angulaire (7) de façon à fournir une information représentative du décalage angulaire donné au cylindre porte-outil (1), en ce que le premier détecteur (20) du passage du front avant (15) des plaques (10, 11) est disposé en amont du cylindre porte-outil (1), à une distance inférieure à la distance théorique entre deux plaques (10, 11) successives, en ce qu'un second détecteur (36) est accouplé à la cinématique générale (30) de façon à délivrer des informations liées au cycle d'introduction des plaques (10, 11) et en ce que le bloc de calcul et de correction (33) reçoit et analyse les informations fournies par lesdits premier et second dispositifs de codage (22, 23) et par lesdits premier et second détecteurs (20, 36) de façon à fournir, à chaque cycle, des ordres de correction de la position angulaire du cylindre porte-outil (1) en fonction de la différence entre la position réelle (x) et la position théorique ($x_{ref}$) d'une plaque introduite.

## Patentanspruch

Automatische Passerrichtvorrichtung für Ausrüstungen zum Verarbeiten von plattenartigen Erzeugnissen mittels Rotationszylinder, wobei die besagte Ausrüstung eine Vorrichtung zum zyklischen Einführen von Platten (10, 11) zu einem, durch den allgemeinen Maschinenantrieb (30) angetriebenen Werkzeugzylinder (1) in der Weise, dass die Zeit zur Einführung der aufeinander folgenden Platten (10, 11) der Abwicklung (D) des Werkzeugzylinders oder einen Mehrfachen desselben entspricht, wobei der Antrieb des Werkzeugzylinders (1) eine durch einen Regelmotor (8) gesteuerte Vorrichtung zum winkelmässigen Verschieben (7) der Vorrichtung in bezug of den allgemeinen Maschinenantrieb (30), eine erste Kodiervorrichtung (22), eine zweite Kodiervorrichtung (23), einen ersten Detektor (20) und eine Berechnungs- und Korrektureinheit (33), welche dadurch gekennzeichnet ist, dass die erste Kodiervorrichtung (22) mit dem allgemeinen Antriebssystem (30) so verbunden ist, dass entsprechende Daten über die theoretische Plattendurchlaufgeschwindigkeit (10, 11) geliefert werden können, dass die zweite Kodiervorrichtung (23) mit der Winkelverschiebe- vorrichtung (7) so verbunden ist, damit entsprechende Daten über die winkelmässige Verschiebung des mit Werkzeugen bestückten Zylinders (1) geliefert werden können, dass der erste Detektor (20) zum Ueberwachen des Durchlaufs der Vorderkante (15) der Platten (10, 11) vor dem Werkzeugzylinder (1) in einem Abstand, der geringer ist als der theoretische Abstand zwischen zwei aufeinander folgenden Platten (10, 11) angeordnet ist, dass ein zweiter an den allgemeinen Maschinenantrieb (30) gekoppelter Detektor (36) in der Lage ist, Daten über den Platteneinführzyklus (10, 11) zu liefern und dass die Berechnungs- und Korrektureinheit (33) Daten vom der erwähnten ersten und zweiten Kodiervorrichtung (22, 23) und der erwähnten ersten und zweiten Detektor (20, 36) erhält und verarbeitet, um bei jedem Arbeitszyklus die erforderlichen Korrekturbefehle für Winkelstellung des Werkzeugzylinders (1) entsprechend der Differenz zwischen der Iststellung (x) und der Sollstellung ($x_{ref}$) einer eingeführten Platte auszugeben, umfasst.

## Claim

Device for automatic registering destined for a rotary cylinder processing plate type products, the said appliance including a device for cyclic plate infeed (10, 11) towards a tooled cylinder (1) driven by the machine's general drive system (30) in such a way that the time of infeed of the successive plates (10, 11) will correspond to the development (D), or the multiple of the latter, of the tooled cylinder (1) including a device for angular shifting (7) with regard to the pilot motor (8) controlled general drive (30), a first coding device (22), a second coding device, (23) a first detector (20) and a calculation and correction unit (33), the latter characterized by the first coding device (22) being linked to the general drive (30) in such a way that it will provide data covering the theoretical plate travelling speed (10, 11), that the second coding device (23) is linked to the angular shifting device (7) so as to be able to provide data covering the angular shifting imparted to the tooled cylinder (1), that the first detector (20) monitoring the appearance of the front edge (15) of the plates (10, 11) is arranged upstream of the tooled cylinder (1) at a distance of less than the theoretical between two successive plates (10, 11), that a second detector (36) is linked to general machine drive (30) so as to be able to supply data covering the plate infeed cycle (10, 11), and that the calculation and correction unit (33) collects and processes the data from the said first and second coding devices (22, 23) and the said first detectors (20, 36) in order to supply with each operating cycle commands for the correction of the angular position of the tooled cylinder (1) as required by the difference between the read position (x) and the theoretical position ($x_{ref}$) of a plate fed in.

FIG: 1

FIG: 2